Europäisches Patentamt

European Patent Office

Office européen des brevets

(19)

(11) Veröffentlichungsnummer: **0 299 534**
**A1**

(12) # EUROPÄISCHE PATENTANMELDUNG

(21) Anmeldenummer: 88111532.3

(22) Anmeldetag: 18.07.88

(51) Int. Cl.⁴: **G09F 21/06 , B64B 1/40**

(30) Priorität: 16.07.87 DE 8709811 U

(43) Veröffentlichungstag der Anmeldung:
**18.01.89 Patentblatt 89/03**

(84) Benannte Vertragsstaaten:
**AT BE DE FR GB NL SE**

(71) Anmelder: **Schur, Peter**
**Florastrasse 8**
**D-2540 Bad Vöslau(DE)**

(72) Erfinder: **Schur, Peter**
**Florastrasse 8**
**D-2540 Bad Vöslau(DE)**

(74) Vertreter: **Patentanwälte Grünecker,**
**Kinkeldey, Stockmair & Partner**
**Maximilianstrasse 58**
**D-8000 München 22(DE)**

(54) **Luftfahrzeug für Werbezwecke.**

(57) Die Erfindung betrifft ein Luftfahrzeug, leichter oder schwerer als Luft, mit einer Hülle und/oder einer Tragstruktur.

Ein solches Luftfahrzeug soll für Werbung in der Luft dergestalt verwendet werden, daß die Werbeinformation auch während des Fluges in einfacher Wese ausgetauscht werden kann und nicht nur auf einfache stationäre Darstellungen beschränkt ist. Ein Bildträger ist am Luftfahrzeug aufgehängt und eine auf den Bildträger gerichtete Projektoreinrichtung ist am Luftfahrzeug und/oder an der Trageinrichung und/oder am Bildträger gehaltert.

EP 0 299 534 A1

## Luftfahrzeug für Werbezwecke

Die Neuerung betrifft ein Luftfahrzeug, leichter oder schwerer als Luft, mit einer Hülle und/oder einer Tragstruktur.

Luftfahrzeuge werden häufig für Werbezwecke eingesetzt, insbesondere Ballons oder Zeppeline. Die Werbeinformation ist bei diesen Luftfahrzeugen auf deren Außenhülle aufgetragen und an derselben befestigt. Dies hat den Nachteil zur Folge, daß die Werbeinformation, wenn überhaupt, zumeist nur in aufwendiger Weise gegen eine andere Werbeinformation ausgetauscht werden kann. Außerdem ist die Werbeinformation auf einfache Darstellungen, beispielsweise den Namen des Produktes oder des Herstellers, für den geworben wird, beschränkt.

Es ist Aufgabe der Neuerung ein Luftfahrzeug der eingangs genannten Art für Werbezwecke so weiterzubilden, daß die Werbeinformation auch während des Fluges in einfacher Weise ausgetauscht werden kann und nicht nur auf einfache Darstellungen beschränkt ist.

Diese Aufgabe wird neuerungsgemäß dadurch gelöst, daß wenigstens ein Bildträger an einem Ende einer mit ihrem anderen Ende an der Hülle und/oder Gondel des Luftfahrzeuges befestigten Trageinrichtung aufgehängt und eine mittelbar oder unmittelbar auf den Bildträger gerichtete Projektoreinrichtung am Luftfahrzeug und/oder an der Trageinrichtung und/oder am Bildträger gehaltert ist.

Die Werbeinformation wird beispielsweise auf einem Diapositiv festgehalten, welches in sehr einfacher Weise hergestellt werden kann und Darstellungen jeglicher, auch komplizierter Art erlaubt. Die auf den Bildträger projizierte Werbeinformation kann jederzeit, d. h. auch während des Fluges, durch einfachen Wechsel des Diapositivs ausgetauscht werden. Mit dem neuerungsgemäßen Luftfahrzeug ist es auch möglich, ein bewegtes Bild, d. h. einen Film auf den Bildträger zu projizieren und damit einen wesentlich verbesserten Werbeeffekt gegenüber dem Stand der Technik zu erzielen. Der Werbeeffekt wird noch durch die Brillianz des projizierten Bildes, insbesondere in der Dämmerung oder nachts, entscheidend erhöht.

Von Vorteil ist es, wenn der Bildträger wenigstens eine Projektionsfläche umfaßt und unterhalb des Luftfahrzeuges aufgehängt und im wesentlichen eben oder gewölbt ausgebildet ist. Natürlich ist eine Anordnung des Bildträgers auch oberhalb des Luftfahrzeuges möglich, wenn gewünscht wird, daß die Werbeinformation oberhalb des Luftfahrzeuges abgebildet wird.

Vorteilhafterweise ist der Bildträger in horizontaler Ebene oder im Winkel zur Horizontalen an der Trageinrichtung aufgehängt.

Gemäß einer Weiterbildung der Erfindung ist der Bildträger als Raumkörpe, insbesondere als Zylinder ausgebildet. Ein solcher Bildträger weist mehrere Betrachtungsflächen auf, so daß unterschiedliche Werbeinformationen zur gleichen Zeit dargestellt werden können.

Der Bildträger kann eine und mehrere Projectionsflächen umfassen. Günstig ist dabei eine Lichtundurchlässige Projektionsfläche, die als Rückprojektionsfolie ausgebildet sein kann. Die Projektoreinrichtung ist vorzugsweise der Rückseite der Projektionsfläche zugewandt bzw. im Inneren des Raumkörpers gehalten. Natürlich kann die Projektoreinrichtung auch auf der Betrachterseite einer reflektierenden Projektionsfläche angeordnet sein, die beispielsweise an der Tragflächenunterseite eines Flugzeuges angebracht ist.

Gemäß einer Weiterbildung der Erfindung ist die Projektionsfläche, insbesondere mittels einer Fernbetätigkungseinrichtung vom Luftfahrzeug lösbar.

Vorteilhafterweise ist das Luftfahrzeug ein Luftschiff, ein Gasballon oder ein Heißluftballon. Die Trageinrichtung kann dann an der Gondel des Luftfahrzeuges oder an der Ballonhülle bzw. dessen Tragstruktur selbst befestigt sein. Günstig ist es, die Projektoreinrichtung an der Gondel zu haltern. Der Strahlengang dann dabei von der Projektoreinrichtung zum Bildträger vertikal verlaufen. Eine weitere Variante besteht darin, den Strahlengang zunächst horizontal und nach Umlenkung vertikal in Richtung zum Bildträger zu richten.

Der Bildträger kann einen Rahmen aufweisen, an dem die Projektionsfläche mittels Befestigungseinrichtungen befestigt ist. Hierbei können der Rahmen und/oder die Projektionsfläche an der Trageinrichtung aufgehängt sein.

Vorteilhafterweise umfaßt der Rahmen Rahmenteile, die mittels der Befestigungseinrichtungen aneinander befestigt sind. Diese Befestigungseinrichtungen können die gleichen sein, wie sie für die Befestigung der Projektionsfläche am Rahmen verwendet werden. Die Befestigungseinrichtung kann aus Lappen der Projektionsfläche bestehen, die den Rahmen formschlüssig umgreifen und mit ihren Enden an der Projektionsfläche selbst befestigt sind. Hierdurch ergibt sich eine einteilige Ausbildung zwischen der Projektionsfläche und den Befestigungseinrichtungen, die nicht nur die Herstellung vereinfacht, sondern auch die Montage.

Die Lappen bedingen aber auch einen flächenmäßig gut verteilten Formschluß, der sowohl die Projektionsfläche als auch den Rahmen versteift.

Vorzugsweise sind die Rahmenteile als aufblasbare Schläuche ausgebildet. Es ist aber auch denkbar, den Rahmen aus starren Streben zu bilden.

Gemäß einer Weiterbildung der Erfindung ist die Projektionsfläche mit Linienrasterförmig verlaufenden Spannbändern versehen. Die Projektionsfläche ist an den Kreuzungspunkten der Spannbänder an der Trageinrichtung aufgehängt. Dies schafft eine einfache und dennoch sichere Verankerung der Projektionsfläche.

Die Trageinrichtung kann vorteilhafterweise aus Zugelementen bestehen, die als Seil und/oder als starre Streben ausgebildet sind.

Nachstehend ist die Erfindung anhand eines Ausführungsbeispiels unter Bezugnahme auf die Zeichnung näher beschrieben. Es zeigen

**Figur 1** Eine Gesamtübersicht eines erfindungsgemäßen Luftfahrzeuges im Flug,

**Figur 2** Eine Seitenansicht der in Figur 1 dargestellten Trageinrichtung mit daran aufgehängtem Bildträger,

**Figur 3** Eine Draufsicht auf den Bildträger nach den Figuren 1 und 2,

**Figur 4** Einen Schnitt entlang der Linie IV/IV in Figur 3,

**Figur 5** Eine Draufsicht auf die in Figur 3 mit A bezeichnete Ecke des Bildträgers,

**Figur 6** Eine vergrößerte Darstellung der Figur 5,

**Figur 7** Eine vergrößerte Darstellung des in Figur 3 mit B bezeichneten Teils des Bildträgers.

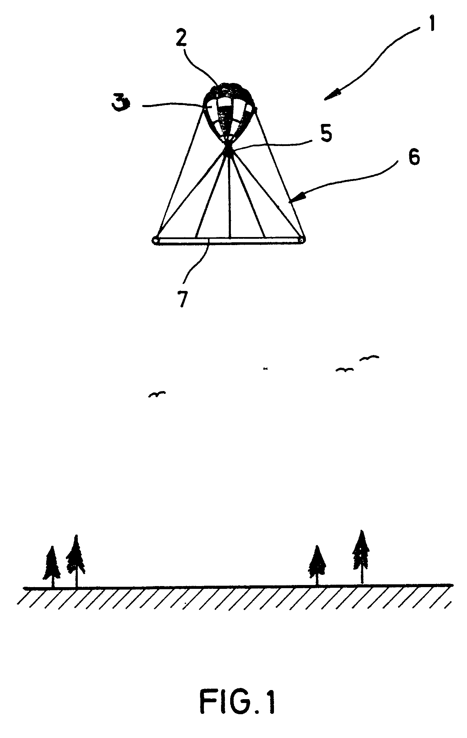

Wie in Figur 1 dargestellt, umfaßt das erfindungsgemäße Luftfahrzeug 1 einen Heißluftballon 2 mit einer Hülle 3, einer als Netz ausgebildeten Tragstruktur 4 und einer daran befestigten Gondel 5. An der Gondel und der Tragstruktur ist mittels einer Trageinrichtung 6 ein Bildträger 7 aufgehängt ist. Der Bildträger 7 ist als ebener Bildträger ausgebildet und unterhalb der Gondel 5 in horizontaler Ebene angeorgnet.

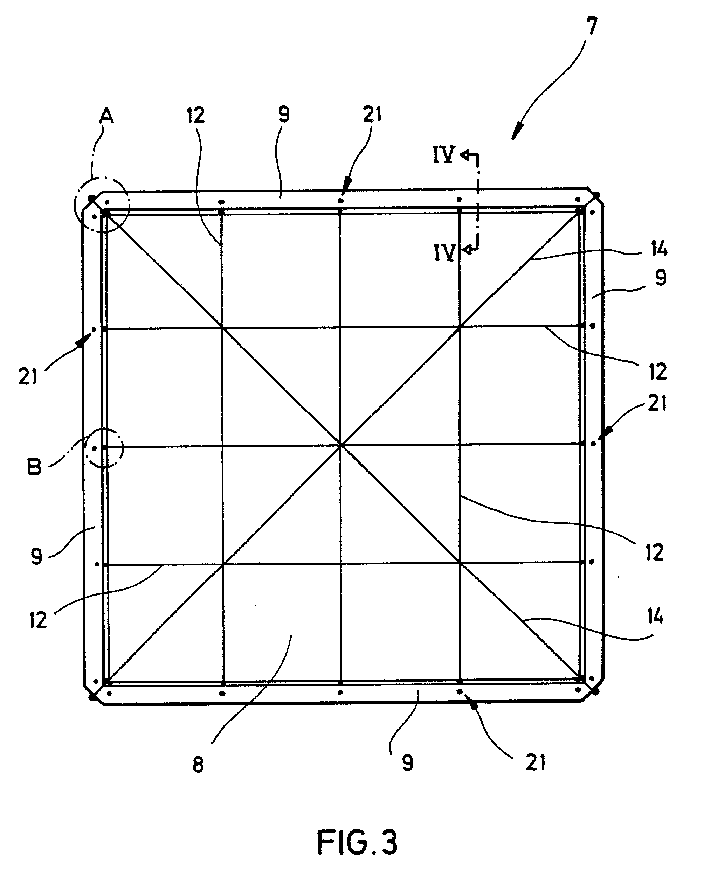

Wie in Figur 3 dargestellt, weist der Bildträger 7 die Form eines Quadrates auf und umfaßt eine Projektionsfläche 8, die an einem sie ungebenden Rahmen bestehend aus vier

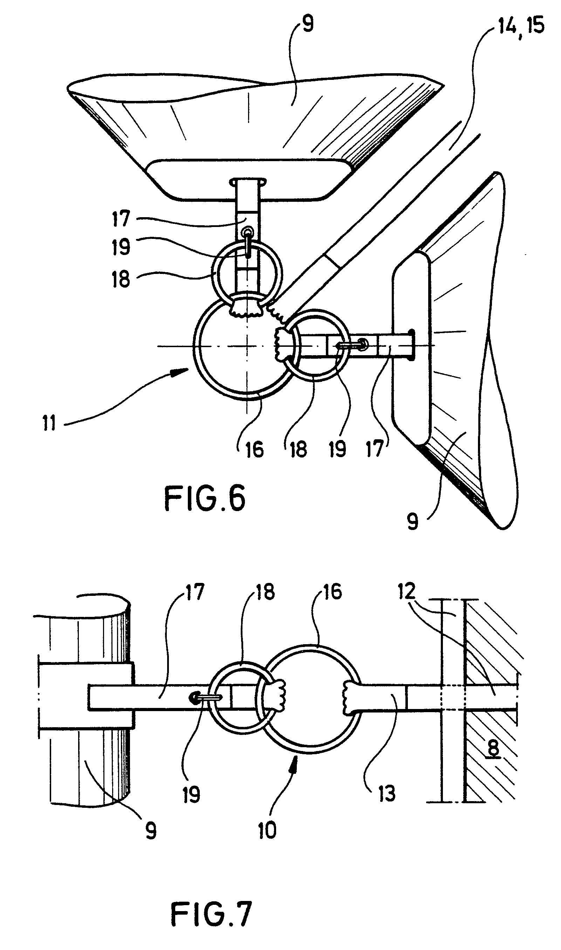

Rahmenteilen 9 in Form von aufblasbaren Kunststoffschläuchen mittels Befestigungseinrichtungen 10 (siehe Figur 7) befestigt ist. Im wesentlichen gleiche Befestigungseinrichtungen 11 dienen zur gegenseitigen Befestigung der Rahmenteile 9 (siehe Figur 6).

Die Projektionsfläche 8 ist als quadratische Rückprojektionsfolie mit einer Größe von etwa 1000 qm ausgebildet. In der Gondel 5 ist eine nicht dargestellte Projektoreinrichtung zur Direktprojektion von Bildern auf die Oberseite der Projektionsfläche angebracht.

Parallel zu den Rahmenteilen 9 verlaufen Spannbänder 12 quer über die Projektionsfläche 8, an deren Ober- und Unterseite befestigt, und bilden ein Linienraster. Verlängerungen 13 der Spannbänder 12 dienen als Teil der Befestigungseinrichtungen 10 zum Befestigen und Spannen der Projektionsfläche 8 an den Rahmenteilen 9. Zwei zusätzliche Spannbänder 14 verlaufen entlang den Diagonalen der Projektionsfläche 8 und sind mit Verlängerungen 15 an den Befestigungseinrichtungen 11 zwischen den Rahmenteilen 9 befestigt.

Sämtliche Befestigungseinrichtungen 10 und 11 sind lösbar. Zu diesem Zweck ist jeweils ein Verbindungsring 16 vorgesehen, an dem sowohl die Verlängerungen 13 und 15 der Spannbänder 12 und 14 permanent als auch mit den Rahmenteilen 9 verbundene Gurte 17 lösbar befestigt sind. Die freien Enden der Gurte 17 sind mit Ringen 18 versehen, die einen kleineren Durchmesser als die Verbindungsringe 16 aufweisen. Wie in den Figuren 6 und 7 dargestellt, sind die Gurte 17 mit den Ringen 18 durch die Verbindungsringe 16 hindurchgeführt, die Ringe 18 auf die Gurte 17 zurückgeschlagen und mit Klemmhaltern 19 in einer

Schließposition festgehalten. Die Klemmhalter 19 können durch Fernbetätigung von der Gondel 5 aus so geschwenkt werden, daß die Ringe 18 freigegeben und somit die Befestigungseinrichtungen 10 und 11 gelöst werden.

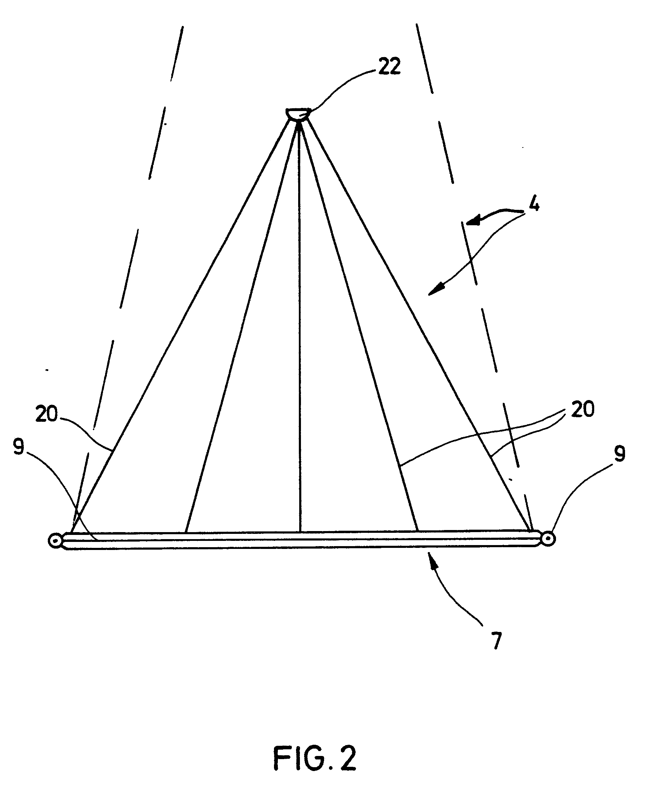

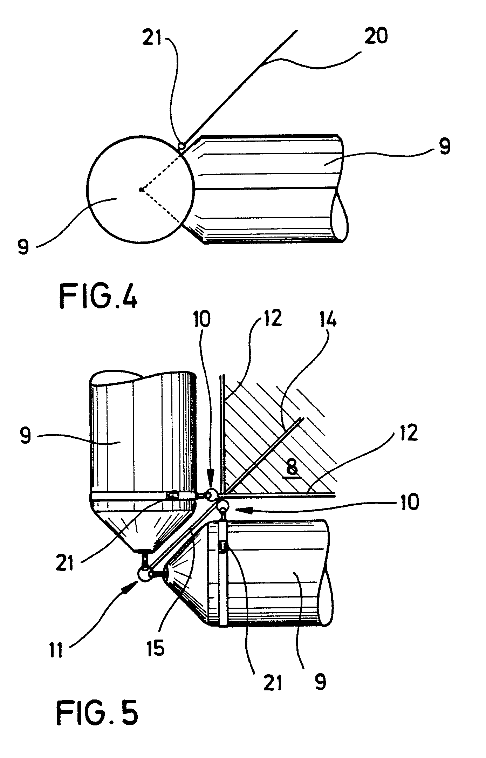

Die Trageinrichtung 6 besteht aus Zugelementen 20 in Form von Seilen, an denen sowohl die Rahmenteile 9 an denen in Figur 3 und 4 mit 21 bezeichneten Stellen als auch die Projektionsfläche 8 an den Kreuzungspunkten der Spannbänder 12 und 14 mittels nicht dargestellter Verbindungseinrichtungen aufgehängt sind. Letztere sind ebenso wie die Befestigungseinrichtungen 10 und 11 von der Gondel 5 aus durch Fernbetätigung lösbar. Ausgehend von den Verbindungseinrichtungen verlaufen die Zugelemente 20 (in der Zeichnung sind lediglich die Zugelemente für die Aufhängung der Rahmenteile 9 gezeigt) schräg nach oben in einen an der Gondel 5 lösbar angebrachten, in Figur 2 schematisch dargestellten Gelenk 22 zusammen.

Wenn das erfindungsgemäße Luftfahrzeug starten soll, wird die Trageinrichtung 6 mittels des Gelenkes 22 an der Gondel 5 des Heißluftballons 2 befestigt. Die Projektionsfläche 8 ist mittels der Verbindungseinrichtungen an den Zugelementen 20 der Trageinrichtung 6 aufgehängt und mittels der Befestigungseinrichtungen 10 an den Rahmenteilen 9 befestigt und gespannt. Die gegenseitige Befestigung der Rahmenteile 9 erfolgt mittels der Befestigungseinrichtungen 11. Die in Form von Kunststoffschläuchen vorliegenden Rahmenteile 9 wird entsprechend der geplanten Flughöhe aufgeblasen.

Während des Fluges werden Diapositive oder Filme, die die Werbeinformationen enthalten, mittels der Projektoreinrichtung auf die Rückseite der Projektionsfläche 8 projiziert. Das großflächige und insbesondere während der Dämmerung oder nachts in auffälliger Weise Leuchtende Bild auf der Projektionsfläche 8 kann von der Erde aus betrachtet werden. Die Werbeinformation wird während des Fluges in einfachster Weise durch Austausch der Diapositive oder der Filme verändert.

Bei der Landung gibt es verschiedene Möglichkeiten. Es kann der Bildträger 7 entweder zusammen mit der Trageinrichtung 6 oder ohne dieselbe vom Heißluftballon 2 getrennt werden. Für den ersten Fall wird das Gelenk 22 von der Gondel 5 gelöst. Für den zweiten Fall werden von der Gondel 5 aus durch Fernbetätigung die Verbindungseinrichtungen zwischen den Zugelementen 20 und den Rahmenteilen 9 sowie der Projektionsfläche 8 gelöst. Infolge der großflächigen Ausbildung der Projektionsfläche 8 fällt der Bildträger 7 ähnlich einem Fallschirm langsam zu Boden.

Durch fernbetätigtes Lösen der Verbindungseinrichtungen zwischen den Zugelementen 20 und den Rahmenteilen 9 sowie der diese verbindenden Befestigungseinrichtungen 11 wird erreicht, daß lediglich die Rahmenteile 9, nicht jedoch die Projektionsfläche 8, zu Boden fallen. Das im vorliegenden Ausführungsbeispiel nicht vorgesehene Trennen der Projektionsfläche 8, nicht jedoch der Rahmenteile 9, ist dann möglich, wenn die diagonalen Spannbänder 14 lösbar - ähnlich der Gurte 17 mit den Ringen 18 und Klemmhaltern 19 - an den Verbindungsringen 16 der Befestigungseinrichtungen 11 befestigt sind.

Das neuerungsgemäße Luftfahrzeug 1 bietet darüberhinaus die Möglichkeit, die Projektionsfläche 8 bei der Landung zusammenzufalten, so daß sie eine geringere Fläche einnimmt. Beispielsweise kann der Pilot sämtliche Verbindungseinrichtungen zwischen den Zugelementen 20 und den Rahmenteilen 9 sowie der Projektionsfläche 8 außer denjenigen lösen, die an den Kreuzungsstellen eines diagonalen Spannbandes 14 mit den parallelen Spannbändern 12 angeordnet sind. Dadurch wird der Bildträger 7 entlang der Diagonalen auf die Hälfte seiner Gesamtfläche zusammengefaltert. Der Pilot kann dabei verhindern, daß der Heißluftballon 2 auf dem Bildträger 7 landet. Dazu ist es lediglich erforderlich, den Bildträger 7 in Bodenberührung zu bringen und dann den Heißluftballon 2 durch den Wind etwas abtreiben zu lasssen.

Durch selektives Lösen der Befestigungs- und Verbindungseinrichtungen kann der Bildträger 7 auch in anderer Weise zusammengefaltert werden, beispielsweise umgekehrt V-förmig entlang einem in der Mitte der Projektionsfläche 8 verlaufenden parallelen Spannband 12, oder M-förmig entlang zweier paralleler Spannbänder 12, die durch ein oder zwei gleichartige Spannbänder 12 getrennt sind, oder auch W-förmig entlang zweier paralleler Rahmenteile 9 und dem parallel dazu verlaufenden Spannband 12 in der Mitte der Projektionsfläche 8.

## Ansprüche

1. Luftfahrzeug, leichter oder schwerer als Luft, mit einer Hülle und/oder einer Tragstruktur, dadurch **gekennzeichnet**, daß wenigstens ein Bildträger(7) an einem Ende einer mit ihrem anderen Ende an der Hülle (3) und/oder Gondel (5) des Luftfahrzeuges (1) befestigten Trageinrichtung (6) aufgehängt und eine mittelbar oder unmittelbar auf den Bildträger (7) gerichtete Projektoreinrichtung am Luftfahrzeug (1) und/oder an der Trageinrichtung (6) und/oder am Bildträger (7) gehalten ist.

2. Luftfahrzeug nach Anspruch 1, dadurch **gekennzeichnet**, daß der Bildträger (7) wenigstens eine Projektionsfläche umfaßt und unterhalb des Luftfahrzeuges (1) aufgehängt und im wesentlichen eben oder gewölbt ausgebildet ist.

3. Luftfahrzeug nach wenigstens einem der Anspruch 1 oder 2, dadurch **gekennzeichnet**, daß der Bildträger (7) in horizontaler Ebene oder im Winkel zur Horizontalen an der Trageinrichtung (6) aufgehängt ist.

4. Luftfahrzeug nach wenigstens einem der Ansprüche 1 - 3, dadurch **gekennzeichnet**, daß der Bildträger als Raumkörper, insbesondere als Zylinder ausgebildet ist.

5. Luftfahrzeug nach wenigstens einem der Ansprüche 1 - 4, dadurch **gekennzeichnet**, daß die Projektionsfläche (8) insbesondere mittels einer Fernbetätigungseinrichtung vom Luftfahrzeug (1) lösbar ist.

6. Luftfahrzeug nach wenigstens einem der Ansprüche 1 - 5, dadurch **gekennzeichnet**, daß der Strahlengang von der Projektoreinrichtung zum Bildträger (7) vertikal oder horizontal und nach Umlenkung vertikal in Richtung zum Bildträger (7) verläuft.

7. Luftfahrzeug nach wenigstens einem der Ansprüche 1 - 6, dadurch **gekennzeichnet**, daß der Bildträger (7) einen Rahmen (9) aufweist, an dem die Projektionsfläche (8) mittels Befestigungseinrichtungen (10) befestigt ist.

8. Luftfahrzeug nach einem der vorhergehenden Ansprüche, dadurch **gekennzeichnet**, daß die Befestigungseinrichtung aus Lappen der Projektionsfläche besteht, die den Rahmen formschlüssig umgreifen und mit ihren Enden an der Projektionsfläche selbst befestigt sind.

9. Luftfahrzeug nach Anspruch 7, dadurch **gekennzeichnet**, dab der Rahmen (9) aus aufblasbaren Schläuchen besteht oder starre Streben aufweist.

10. Luftfahrzeug nach einem der vorhergehenden Ansprüche, dadurch **gekennzeichnet**, daß die Projektionsfläche (8) mit linienrasterförmig verlaufenden Spannbändern (12) versehen ist und die Projektionsfläche (8) an den Kreuzungspunkten der Spannbänder (12, 14) an der Trageinrichtung (6) aufgehängt ist.

11. Luftfahrzeug nach einem der vorhergehenden Ansprüche, dadurch **gekennzeichnet**, daß die Trageinrichtung (6) aus Zugelementen (20) besteht, die als Seil und/oder als starre Streben ausgebildet sind.

FIG.1

FIG.2

FIG.3

FIG.4

FIG.5

FIG.6

FIG.7

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | BE-A- 904 135 (KUZMEK) <br> * Insgesamt * <br> --- | 1-3,7,9 ,11 | G 09 F 21/06 <br> B 64 B 1/40 |
| A | DE-A-2 309 904 (KRÜGER) <br> * Insgesamt * <br> --- | 1 | |
| A | LU-A- 39 469 (FRITZ) <br> * Insgesamt * <br> --- | 1 | |
| A | DE-A- 623 053 (SCHARF) <br> * Insgesamt * <br> --- | 1 | |
| P,X | DE-U-8 709 811 (SCHUR) <br> * Schutzansprüche * <br> ----- | 1-11 | |

**RECHERCHIERTE SACHGEBIETE (Int. Cl.4)**

B 64 B
G 09 F

Der vorliegende Recherchenbericht wurde für alle Patentansprüche erstellt

| Recherchenort | Abschlußdatum der Recherche | Prüfer |
|---|---|---|
| DEN HAAG | 10-10-1988 | HAUGLUSTAINE H.P.M. |